# EUROPÄISCHE PATENTSCHRIFT

(11) **EP 4 105 507 B1**
(45) Veröffentlichungstag und Bekanntmachung des Hinweises auf die Patenterteilung: **17.12.2025**
(21) Anmeldenummer: 22178213.9
(22) Anmeldetag: 09.06.2022
(51) Int. Cl.: F16C 33/50, F16C 33/54, F16C 19/22, F16C 33/46

(54) **KÄFIGSEGMENT FÜR EINEN ROLLENLAGERKÄFIG**
CAGE SEGMENT FOR A ROLLER BEARING CAGE
SEGMENT DE CAGE POUR UNE CAGE DE PALIER À ROULEAUX

(30) Priorität: 18.06.2021 DE 102021206285
(43) Veröffentlichungstag der Anmeldung: 21.12.2022
(73) Patentinhaber: Aktiebolaget SKF, 415 50 Göteborg (SE)
(72) Erfinder: Beyfuss, Berthold, 97535 Wasserlosen-Kaisten (DE); Friedrich, Hans-Jürgen, 97486 Königsberg-Römershofen (DE); Radina, Alfred, 97711 Poppenlauer (DE); Schierling, Jonas, 97437 Hassfurt (DE); Soellner, Maximilian, 97494 Bundorf (DE)
(74) Vertreter: Kuhstrebe, Jochen

(56) Entgegenhaltungen:
- DE-A1- 102015 206 533
- DE-A1- 102016 216 286
- DE-A1- 102019 115 335
- US-A- 3 820 867

## Beschreibung

Vorliegende Erfindung betrifft ein Käfigsegment für einen Wälzlagerkäfig gemäß dem Oberbegriff von Patentanspruch 1. Vorliegende Erfindung betrifft des Weiteren einen Wälzlagerkäfig mit einer Mehrzahl von Käfigsegmenten gemäß Patentanspruch 7 und ein Wälzlager gemäß Patentanspruch 8.

Wälzkörper in Wälzlager können beispielsweise durch Wälzlagerkäfige geführt und gehalten werden. Dies kann nicht nur im Betrieb des Wälzlagers von Nutzen sein, sondern auch bei dem Zusammenbau des Wälzlagers. Es ist bekannt, dass Wälzlagerkäfige zum einen aus Metall durch verschiedene Herstellungsverfahren und zum anderen aus einem Kunststoff, beispielsweise durch ein Spritzgussverfahren, hergestellt werden können. Aufgrund des Temperaturverhaltens und der benötigten Festigkeit des Materials kann es notwendig sein, insbesondere einen glasfaserverstärkten Kunststoff, wie zum Beispiel glasfaserverstärktes PEEK, zu verwenden. Allerdings können gerade bei Großlagern diese Wälzlagerkäfige allein schon durch die benötigten Materialmengen, insbesondere bei Kunststoffen mit einem hohen Kilogrammpreis, sehr teuer werden. Meist werden größere Metallkäfige dadurch gefertigt, indem Vollmaterial zunächst gewalzt und dann spanend weiterbearbeitet wird. Dabei ist den bekannten Verfahren gemein, dass sie einerseits einen hohen Materialeinsatz erfordern, und anderseits eine Kombination von mehreren, zum Teil aufwendigen Herstellungsverfahren mit unterschiedlichen Werkzeugmaschinen erfordern, so dass die Herstellung aufwendig und/oder kostenintensiv sein kann.

DE 10 2019 115335 A1 beschreibt ein Distanzstück für ein Kugellager, das einen Streifenabschnitt aus Blech umfasst, welcher zu einem Ring gebogen ist, der zwei konkav gekrümmte Anlaufflächen für Wälzkörper aufweist. DE 10 2019 115335 A1 offenbart ein Käfigsegment nach dem Oberbegriff des Anspruchs 1.

DE 10 2015 206533 A1 beschreibt ein Käfigsegment eines Käfigs eines Wälzlagers, das aus zwei in Axialrichtung des Käfigs mit Abstand zueinander angeordneten Seitenplatten und zwei in Umfangsrichtung des Käfigs mit Abstand zueinander angeordneten Querplatten besteht, wobei die beiden Querplatten mit den beiden Seitenplatten fest verbunden sind, und bei dem die beiden Querplatten und die beiden Seitenplatten eine Tasche zur Aufnahme eines Wälzkörpers bilden. Die Seitenplatten weisen an ihren beiden in Umfangsrichtung des Käfigs weisenden Enden jeweils eine Nut auf, an den beiden axialen Enden der Querplatten ist jeweils ein in Axialrichtung weisender Steg ausgebildet, die Stege der Querplatten sind in zugeordneten Nuten der Seitenplatten angeordnet, und die Querplatten sind im Bereich der Stege fest mit den Seitenplatten verbunden.

US 3 820 867 A beschreibt einen segmentierten Haltering für ein Kugellager.

DE 10 2016 216 286 A1 beschreibt einen segmentierten Wälzlagerkäfig aus einer Reihe von zu einem Käfigring zusammengesetzten Käfigsegmenten, wobei die Käfigsegmente aus jeweils zwei im Wesentlichen in Umfangsrichtung des Wälzlagerkäfigs sich erstreckende Seitenplatten und wenigstens einen die Seitenplatten miteinander verbindenden Quersteg bestehen, wobei ferner die Seitenplatten benachbarter Käfigsegmente über daran ausgebildete Stirnseiten aneinander angrenzen, und wobei Mittel zum Verbinden der Käfigsegmente miteinander vorgesehen sind.

Es ist deshalb Aufgabe vorliegender Erfindung, ein Käfigsegment für einen Wälzlagerkäfig bereitzustellen, der einfach und kostengünstig hergestellt werden kann.

Diese Aufgabe wird durch ein Käfigsegment für einen Wälzlagerkäfig gemäß Patentanspruch 1, einen Wälzlagerkäfig gemäß Patentanspruch 7 und ein Wälzlager gemäß Patentanspruch 8 .

Im Folgenden wird ein Käfigsegment für einen mehrteiligen Wälzlagerkäfig, insbesondere für Großwälzlager vorgeschlagen. Das Käfigsegment ist ein Käfigsegment für ein Rollenlager, d.h. ein Wälzlager mit rollenförmigen Wälzkörpern, wie zum Beispiel Kegelrollen, Zylinderrollen, Nadeln, und dergleichen. Als Alternative (nicht beansprucht) kann das Käfigsegment auch ein Käfigsegment für ein Rollenlager wie Tonnen sein. Um den Materialeinsatz und den Fertigungsaufwand zu reduzieren, liegt in einer Vorstufe der Fertigung das Käfigsegment als Bausatz vor, der aus einem oder mehreren ebenen Metallblechbauteilen besteht, wobei die Metallblechbauteile dazu ausgelegt sind, zusammengesetzt zu sein, um das Käfigsegment auszubilden. Dabei weist das Käfigsegment in seiner zusammengesetzten Form mindestens eine Fügestelle auf, an der zwei Enden der Metallblechbauteile zusammengefügt sind, um eine Tasche zu bilden, die dazu geeignet ist, zumindest einen Wälzkörper aufzunehmen. Das heißt, bei einem Metallblechbauteil wird dieses an seinen Enden zusammengefügt. Durch die Verwendung von Metallblech kann im Vergleich zu einem herkömmlichen Käfigsegment, insbesondere aus Kunststoff, das Käfigsegment dünner gestaltet werden. Dies hat neben einer Gewichts- und Materialeinsparung den weiteren Vorteil, dass durch den daraus resultierenden geringeren Abstand zwischen den Wälzkörpern gerade bei großen Wälzlagern mehr Wälzkörper in dem Wälzlager untergebracht werden können, wodurch eine Leistungsfähig des Wälzlagers erhöht werden kann. Bei einem Großwälzlager kann es sich insbesondere um ein Wälzlager mit einem Durchmesser von mehr als einem Meter handeln.

Bei dem Metallblech kann es sich insbesondere um eine Metallblechplatte, eine Metallblechtafel, ein Metallblechband, insbesondere ein aufgewickeltes Metallblechband (ein sogenanntes Coil) oder dergleichen handeln. Metallblech kann einfach und kostengünstig, beispielsweise durch Schneiden, Laserschneiden, Prägen, Tiefziehen und Biegen, bearbeitet und geformt werden. Ferner kann auf ein zerspanendes Bearbeitungsverfahren verzichtet werden, sodass auch ein Materialausnutzungsgrad erhöht werden kann.

Bevorzugt sind das eine oder die mehreren Metallblechbauteile des Käfigsegments aus einem Metallblech geschnitten, insbesondere lasergeschnitten, gestanzt und/oder genibbelt. Mit anderen Worten werden die für das Käfigsegment benötigten Trennlinien in dem Metallblech mittels Schneidens, insbesondere Laserschneidens, Stanzens und/oder Nibbelns vorgesehen. Das bedeutet, dass zunächst die Kontur des Käfigsegment in das Metallblech geschnitten, gestanzt und/oder genibbelt wird und anschließend die Form des Käfigsegments aus dem Metallblech gelöst wird. Dabei kann ein Laser ein Stanzwerkzeug, eine Nibbelmaschine oder dergleichen verwendet werden.

Gemäß der beanspruchten Erfindung ist das Käfigsegment mit zumindest einem Funktionselement versehen. Weiterhin kann in der zusammengesetzten Form des Käfigsegments das zumindest eine Funktionselement aus der Ebene des Metallblechbauteils heraus geformt, insbesondere herausgebogen, sein. Dadurch kann das Funktionselement besser in Anlage mit einem Element gebracht werden, mit dem das Funktionselement zusammenwirken soll. Ferner kann ein zur Tasche hin und/oder von der Tasche weg ausbuchtendes Funktionselement zur Erzeugung eines Abstandes zwischen den einzelnen Wälzkörpern, insbesondere in dem Fall, bei dem die Metallblechbauteile aus Festigkeits- und/oder Designgründen aus einem verhältnismäßig dünnen Metallblech gefertigt sind, dienen. Das heißt, das zur Tasche hin und/der von der Tasche weg ausbuchtende Funktionselement kann insbesondere dazu ausgelegt sein, eine fehlende Metallblechdicke auszugleichen.

Bevorzugt ist zumindest eines der Metallblechbauteile der Vorstufe des Käfigsegments mit einer Kontur versehen, wobei die Kontur dazu ausgelegt ist, in der zusammengesetzten Form des Käfigsegments das zumindest eine Funktionselement zu bilden. Das heißt, die Funktionselemente können beim Auslösen des Metallblechbauteils zumindest teilweise mitgeformt werden, sodass auf einen zusätzlichen Formungsschritt verzichtet werden kann. Auch wird durch die Konturierung des Käfigsegments, um das zumindest eine Funktionselement zu bilden, ein Teil des Materials des Metallblechbauteils entfernt, wodurch das resultierende Käfigsegment leichter wird. Auch kann die Positionierung des Funktionselements präziser erfolgen. Bevorzugt ist die Kontur geschnitten, insbesondere, lasergeschnitten. Alternativ oder zusätzlich kann die Kontur auch gestanzt und/oder genibbelt sein. Gemäß der beanspruchten Erfindung, ist das zumindest eine Funktionselement ein Halteelement ist, das dazu ausgebildet ist, mit einem Wälzkörper zusammenzuwirken, um sie zu halten, wobei das Halteelement in der zusammengesetzten Form des Käfigsegments der Tasche abgewandt ist. Als Alternative (nicht beansprucht), ist das zumindest eine Funktionselement ein Halteelement ist, das dazu ausgebildet ist, mit einem Wälzkörper zusammenzuwirken, um sie zu halten, wobei das Halteelement in der zusammengesetzten Form des Käfigsegments der Tasche zugewandt ist. Insbesondere kann ein Halteelement dazu ausgebildet sein, ein in der Tasche des Käfigsegments aufgenommenen Wälzkörper in dem Käfigsegment, insbesondere an einer gewünschten Position, zu halten. Alternativ oder zusätzlich kann das Halteelement als eine Lasche ausgebildet sein, so dass ein Wälzkörper in das Käfigsegment eingeschnappt werden kann und sich der Wälzkörper beispielsweise auch bei einer Überkopfmontage nicht von dem Käfigsegment löst. Beispielsweise kann das Halteelement dazu ausgebildet sein, zu verhindern, dass das Käfigsegment radial nach außen wandert und/oder dafür zu sorgen, dass das Käfigsegment um den Wälzkörper herum bleibt.

Ferner kann das zumindest eine Funktionselement ein Führungselement sein, das dazu ausgebildet ist, mit einem Bord zusammenzuwirken, um das Käfigsegment zu führen, wobei das Führungselement in der zusammengesetzten Form des Käfigsegments dem Bord zugewandt ist. Durch ein Führen an einem Bord des Wälzlagers kann vorteilhafterweise auf eine Führung des Wälzlagerkäfigs an einer Laufbahn des Wälzlagers verzichtet werden, wodurch die Lebensdauer der Laufbahnen erhöht werden kann.

Weiterhin kann das zumindest eine Funktionselement ein Verbindungselement sein, das dazu ausgelegt ist, mit einem Kopplungselement zusammenzuwirken, um das Käfigsegment mit einem weiteren Käfigsegment zu verbinden. Die Käfigsegmente können durch das Kopplungselement zusätzlich zusammengehalten werden, wodurch der Käfigverbund an Stabilität gewinnt und/oder eine Montage des Käfigs vereinfacht werden kann. Durch das Kopplungselement, welches beispielsweise ein Seil, Draht oder ein Ring sein kann und eine definierte Vorspannung hat, können die Käfigsegmente geführt werden.

Bevorzugt kann Verbindungselement zumindest eine Öse aufweisen, durch die das Kopplungselement durchfädelbar ist. Bei einer Ausgestaltung der Verbindungselemente als Ösen kann das Kopplungselement auf einfache Weise durch diese Ösen durchgeführt und bei Bedarf wieder entfernt werden. Das Kopplungselement ist dabei nicht an den Ösen fixiert, sondern kann sich in den Ösen bewegen. Hierdurch wird ein Spiel zwischen den Käfigsegmenten, und damit den Wälzkörpern, und eine Bewegung der Käfigsegmente zueinander nicht eingeschränkt. Alternativ können die Ösen auch als offene Haken oder Laschen ausgebildet sein, in die das Kopplungselement einhängbar oder einklipsbar oder einschnappbar ist.

Gemäß einer weiteren bevorzugten Ausführungsform weist das Käfigsegment an der Fügestelle an dem ersten Ende ein erstes Ausrichtungselement und an dem zweiten Ende ein zweites Ausrichtungselement auf, wobei das zweite Ausrichtungselement komplementär zu dem ersten Ausrichtungselement ist, und wobei das erste und das zweite Ausrichtungselement zusammenwirken, um das erste Ende und das zweite Ende in zumindest einer ersten Richtung festzulegen. Beispielsweise können die Ausrichtungselemente dazu ausgebildet sein, das erste Ende und das zweite Ende derart auszurichten, dass das Käfigsegment eine kantenfreie oder stufenfreie einer Laufbahn eines Wälzkörperrings gegenüberliegende Fläche aufweist. Ferner kann das Ausrichtungselement auch dazu eingerichtet sein, in einer zu der ersten Richtung senkrechten zweiten Richtung eine Einstellungsmöglichkeit bereitzustellen, sodass die Fügestelle dazu geeignet ist, Fertigungstoleranzen zu kompensieren. Ferner können das erste und das zweite Ausrichtungselement dazu eingerichtet sein, ineinander einzugreifen. Beispielsweise kann das erste Ausrichtungselement eine erste Verzahnung und das zweite Ausrichtungselement ein zu der ersten Verzahnung komplementäre zweite Verzahnung aufweisen.

Gemäß einem weiteren Aspekt wird ein Wälzlagerkäfig, insbesondere für Großwälzlager, mit einer Mehrzahl von Käfigsegmenten, wie voranstehend beschrieben, vorgeschlagen. Dabei kann eine Mehrzahl von Käfigsegmenten über ein Kopplungselement zumindest zeitweise verbindbar sein. Dabei kann beispielsweise jeder zweite Wälzkörper in einem Käfigsegment geführt werden. Alternativ kann auch ein Käfigsegment für jeweils einen Wälzkörper vorgesehen sein. Beispielsweise kann der Außendurchmesser des Wälzlagerkäfigs mehr als 1200mm betragen.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Wälzlagerkäfig gehalten werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Käfigsegments gemäß einer ersten Ausführungsform;
- Fig. 2:: eine perspektivische Ansicht eines Metallblechbauteils des Käfigsegments der Fig. 1,
- Fig. 3:: eine perspektivische Ansicht eines Käfigsegments gemäß einer zweiten Ausführungsform,
- Fig. 4:: eine perspektivische Ansicht eines Metallblechbauteils des Käfigsegments der Fig. 3, und
- Fig. 5:: eine perspektivische Ansicht eines Wälzlagerkäfigs gemäß einer ersten Ausführungsform.

Im Folgenden werden gleiche oder funktionell gleichwirkende Elemente mit denselben Bezugszeichen gekennzeichnet.

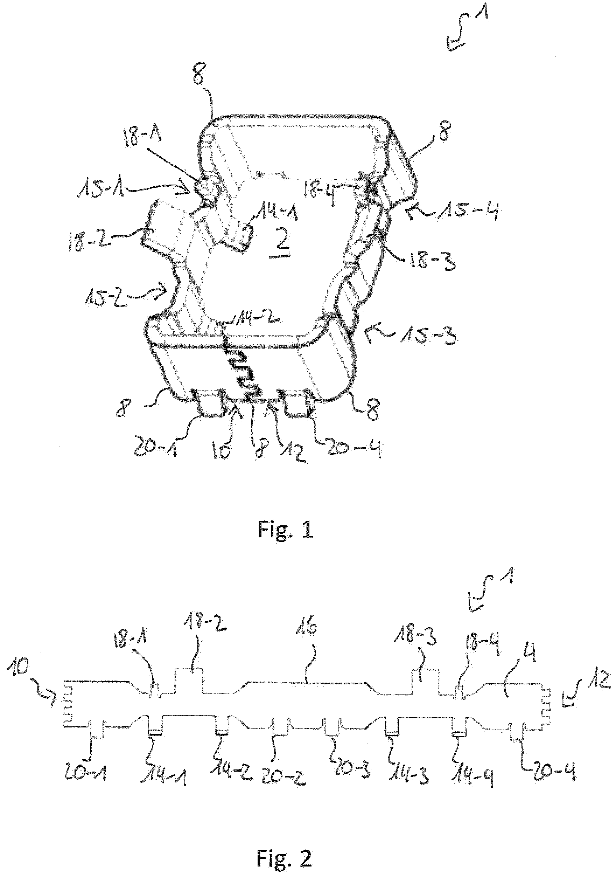

Mit Bezug auf die Fig. 1 und 2 wird ein Käfigsegment 1 gemäß einer ersten Ausführungsform gezeigt. Die Fig. 1 zeigt eine perspektivische Ansicht auf das Käfigsegment 1 und die Fig.2 zeigt eine perspektivische Ansicht auf ein Metallblechbauteil 4 des Käfigsegments 1 der Fig. 1.

Das Käfigsegment 1 umfasst ein Metallblechbauteil 4, das an einer Fügestelle 6 zusammengefügt ist, um eine Taschen 2 zu bilden, die dazu eingerichtet ist, zumindest einen Wälzkörper aufzunehmen. Das Käfigsegment 1 der Fig. 1 besteht in einer Vorstufe der Fertigung aus einem Bausatz mit einem ebenen Metallblechbauteil 4. Um das Käfigsegment 1 aus dem Metallblechbauteil 4 zusammenzusetzen, wird das Metallblechbauteil 4 jeweils an vorgegebenen Eckbereichen 8 gebogen und an den zwei Enden des Metallblechbauteils 4 zusammengefügt, wodurch die Fügestelle 6 gebildet wird. Das zusammengefügte Käfigsegment 1 bildet die Tasche 2, die dazu geeignet ist, zumindest einen Wälzkörper aufzunehmen.

An den Enden des Metallblechbauteils 4 sind ein ersten Ausrichtungselement 10 und ein zweiten Ausrichtungselement 12, das komplementäre zu dem ersten Ausrichtungselement 10 ist, vorgesehen. Bei der in Fig. 1 und 2 gezeigten Ausführungsform sind die Ausrichtungselemente 10, 12 rechteckige Verzahnungen. Es sind allerdings auch andere Formen, wie beispielsweise wellenförmige, dreieckige und/oder mehreckige, vorstellbar. Die beiden Ausrichtungselemente 10, 12 können beispielsweise gestanzt und/oder geschnitten werden. Dabei sind die Ausrichtungselement 10, 12 dazu ausgebildet, das Käfigsegment 1 an der Fügestelle 6 derart auszurichten, dass das Käfigsegment zusammengefügt werden kann. Insbesondere sind die Ausrichtungselemente 10, 12 dazu ausgelegt, die aneinander gefügten Seiten in einer ersten Richtung, die senkrecht zu der Fläche der Tasche 2 ist, festzulegen und in zumindest einer zu der ersten Richtung senkrechten Richtung eine Einstellbarkeit bereitzustellen, die dazu geeignet ist, Fertigungstoleranzen zu kompensieren.

Ferner sind an dem Käfigelement 1 vier der Tasche 2 zugewandte Halteelemente 14-1, 14-2, 14-3, 14-4 vorgesehen, die dazu ausgelegt sind, den Wälzkörper 32 in der Tasche 2 an einer gewünschten Position zu halten bzw. zu verhindern, dass das Käfigsegment 1 im Gebrauch radial nach außen wandert. Ferner sind bei dem Käfigsegment vier zur Tasche hin ausbuchtende Haltelemente 15-1, 15-2, 15-3, 15-4, beispielsweise durch Biegen, umgeformt, die ebenfalls dazu ausgelegt sind, den Wälzkörper an einer gewünschten Position in der Tasche 2 zu halten. Zudem können die zur Tasche hin ausbuchtende Haltelemente 15-1, 15-2, 15-3, 15-4 zur Erzeugung eines Abstandes zwischen den einzelnen Wälzkörpern, insbesondere in dem Fall, bei dem die Seitenelemente 4 aus Festigkeits- und/oder Designgründen aus einem verhältnismäßig dünnen Blech gefertigt werden, dienen. Das heißt, die zur Tasche hin ausbuchtende Haltelemente 15-1, 15-2, 15-3, 15-4 können insbesondere dazu ausgelegt sein, eine fehlende Blechdicke auszugleichen.

Außerdem sind vier Halteelemente 18-1, 18-2, 18-3, 18-4 an der Tasche 2 abgewandten Seite des Käfigsegments 1 vorgesehen, die dazu ausgelegt sind, einen Wälzkörper zu halten, der außen an dem Käfigsegment 1 geführt wird. Des Weiteren sind an den einem Bord eines Wälzlagers zugewandten Flächen des Käfigsegments 1 Führungselemente 20-1, 20-2, 20-3, 20-4 vorgesehen, die dazu ausgelegt sind, einen Wälzlagerkäfig an einem Bord des Wälzlagers zu führen. Dadurch kann vorteilhafterweise auf eine Führung des Wälzlagerkäfigs an eine Laufbahn des Wälzlagers verzichtet werden, wodurch die Lebensdauer der Laufbahnen erhöht werden kann. Ferner können an dem Käfigsegment Verbindungselemente vorgesehen sein, an denen Kopplungselemente angebracht werden können, um die einzelnen Käfigsegmente 1 zu einem Wälzlagerkäfig zu verbinden. Die Form der Verbindungselemente ist im Wesentlichen abhängig von dem gewählten Kopplungselement.

Das Metallblechbauteil 4 des Käfigsegments 1 ist aus einem Metallblech mit einem Laser geschnitten sind. Dabei weist die Außenkontur 16 des Metallblechbauteils, bevor das Käfigsegment zusammengesetzt wird, mehrere Auskragungen und Ausnehmungen auf, die in der zusammengesetzten Form des Käfigsegments 1 die oben genannten Funktionselemente 14, 18, 20 bilden, indem sie aus der Ebene des Metallblechbauteils 4 herausgebogen sind, wie in Fig. 1 gesehen werden kann. Das heißt, das Metallblechbauteil 4 wird mit allen Auskragungen und Ausnehmungen, die zum Bilden des späteren Funktionselements benötigt werden, aus der Metallblechtafel gelöst und anschließend zusammengefügt. Die Funktionselemente 14, 18, 20 können dabei vor dem Zusammenfügen aus der Ebene des Metallblechbauteils 4 oder nach dem Zusammenfügen aus der Ebene des Metallblechbauteils 4 herausgebogen werden. Selbstverständlich können die Funktionselement auch Einbuchtungen und Ausbuchtungen bilden, die beispielsweise eingerichtet sind, einen Wälzkörper in dem Käfigsegment 1 zu halten bzw. an einer gewünschten Position zu positionieren. Durch die Konturierung des Metallblechbauteils 4 und der damit verbundenen Reduzierung der Materialmenge des fertigen Käfigsegments im Vergleich zu einem Käfigsegment, das aus einem im Wesentlichen rechteckigen Metallblechbauteil gefertigt würde, ist des Käfigsegment 1 leichter.

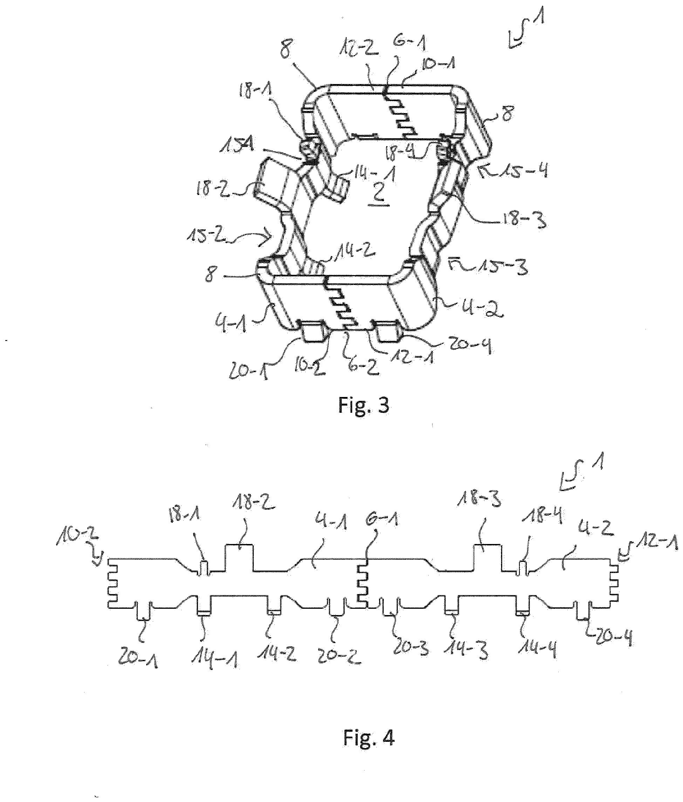

Mit Bezug auf die Fig. 3 und 4 wird ein Käfigsegment 1 gemäß einer zweiten Ausführungsform gezeigt. Die Fig. 3 zeigt eine perspektivische Ansicht auf das Käfigsegment 1 und die Fig. 4 zeigt eine perspektivische Ansicht auf ein Metallblechbauteil 4 des Käfigsegments 1 der Fig. 3. Das Käfigsegment der Fig. 3 und 4 umfasst im Gegensatz zu dem Käfigsegment der Fig. 1 und 2 zwei Metallblechbauteile 4-1, 4-2, die an zwei Fügestellen 6-1, 6-2 zusammengefügt sind. Alternativ ist es auch vorstellbar, mehr als zwei Fügestellen, wie zum Beispiel vier oder mehr Fügestellen, vorzusehen.

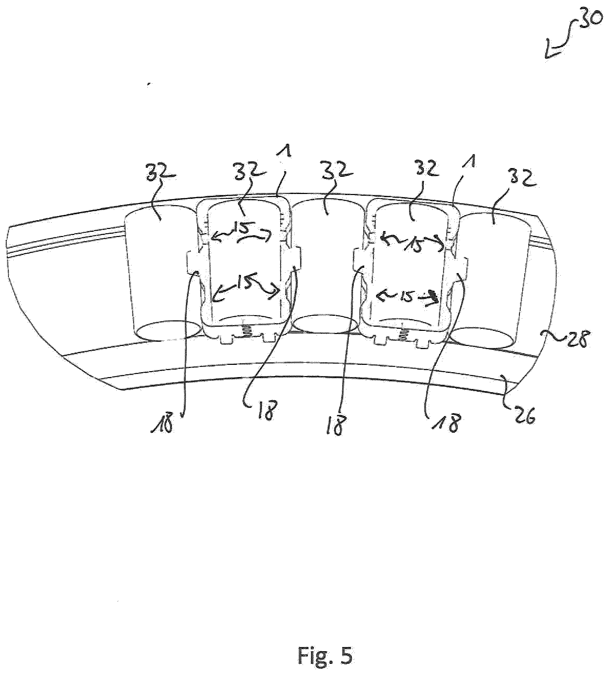

Fig. 5 zeigt eine perspektivische Ansicht einen Ausschnitt eines Wälzlagerkäfigs 30, bei dem das Käfigsegment 1 der Fig. 1 verwendet wird. Bevorzugt kann der Wälzlagerkäfig 30 bei Großwälzlagern mit einem Durchmesser von mehr als einem Meter eingesetzt werden. Der Wälzlagerkäfig 30 hat mehrere Käfigsegmente 1, wie voranstehend beschrieben, wobei die mehreren Käfigsegmente 1 mit mehreren Kopplungselementen (nicht gezeigt) verbunden sind. Dabei wird bei dem Wälzlagerkäfig 30 jeder zweite Wälzkörper 32 in einer Tasche 2 des Käfigsegments 1 geführt, während die andere Hälfte der Wälzkörper 32 jeweils zwischen zwei Käfigsegmenten 1 geführt werden. Alternativ kann auch ein Käfigsegment 1 für jeweils einen Wälzkörper 32 vorgesehen sein. Die Wälzkörper 32 rollen auf einer Innenlaufbahn 28 eines Innenrings 26 und auf der Außenlaufbahn eines Außenrings (nicht gezeigt) eines Wälzlagers ab, um eine relative Rotation des Innenrings und des Außenrings zu ermöglichen. Wie beispielsweise in der Fig. 1 gezeigt ist, sind sowohl der Tasche 2 abgewandte Laschen 18 vorgesehen, die dazu ausgelegt sind, die Wälzkörper 32 zu halten, die zwischen den Käfigsegmenten 1 angeordnet sind, als auch nach innen in die Tasche ausbuchtende Halteelemente 15, die dazu ausgelegt sind, die Wälzkörper 32, die in der Tasche 2 aufgenommen sind, an einer gewünschten Position in der Tasche 2 zu halten.

Um den Materialeinsatz und den Fertigungsaufwand zu reduzieren, wird vorgeschlagen, das Käfigsegment 1 aus einem Metallblech herzustellen, so dass auf ein material- und aufwandintensives zerspanendes Bearbeitungsverfahren verzichtet werden kann. Dabei liegt in einer Vorstufe der Fertigung das Käfigsegment 1 als Bausatz vor, der aus einem oder mehreren ebenen Metallblechbauteilen 4 besteht, die mit Funktionselementen, die zum Halten und Führen von Wälzkörpern, zum Führen des Käfigsegments und/oder zum Verbinden der Käfigsegmente untereinander ausgebildet sind, versehen sind. Dabei werden die Funktionselemente bereits in die Kontur der Metallblechbauteilen eingearbeitet, wenn die Metallblechbauteile aus dem Metallblech gelöst werden. Dadurch kann das Käfigsegment 1 mit einem geringen Materialeinsatz und/oder einem hohen Materialausnutzungsgrad sowie mit einem relativ geringen Arbeitsaufwand und damit kostengünstig, insbesondere auch bei kleinen Stückzahlen, hergestellt werden.

### Bezugszeichenliste

- 1: Käfigsegment
- 2: Tasche
- 4: Metallblechbauteil
- 6: Fügestelle
- 8: Ecke
- 10: Erstes Ausrichtungselement
- 12: Zweites Ausrichtungselement
- 14: Halteelement
- 15: Halteelement
- 16: Kontur
- 18: Lasche
- 20: Führungselement
- 26: Innenring
- 28: Innenlaufbahn
- 30: Wälzlagerkäfig
- 32: Wälzkörper

## Patentansprüche

1. Käfigsegment (1) für einen mehrteiligen Wälzlagerkäfig (30), insbesondere für Großwälzlager, wobei in einer Vorstufe der Fertigung das Käfigsegment (1) als Bausatz vorliegt, der aus einem oder mehreren ebenen Metallblechbauteilen (4) besteht, wobei die Metallblechbauteile (4) dazu ausgelegt sind, zusammengesetzt zu sein, um das Käfigsegment (1) auszubilden, wobei das Käfigsegment (1) in seiner zusammengesetzten Form mindestens eine Fügestelle (6) aufweist, an der zwei Enden der Metallblechbauteile (4) zusammengefügt sind, um eine Tasche (2) zu bilden, die dazu geeignet ist, zumindest einen rollenförmigen Wälzkörper (32) aufzunehmen, wobei das Käfigsegment (1) mit zumindest einem Funktionselement (14, 15, 18, 20) versehen ist, wobei in der zusammengesetzten Form des Käfigsegments (1) das zumindest eine Funktionselement (14, 15, 18, 20) aus der Ebene des Metallblechbauteils (4) heraus geformt, insbesondere herausgebogen ist,
**dadurch gekennzeichnet, dass** das zumindest eine Funktionselement ein Halteelement ist, das dazu ausgebildet ist, mit einer Kegelrolle, Zylinderrolle oder Nadel zusammenzuwirken, um sie zu halten, wobei das Halteelement in der zusammengesetzten Form des Käfigsegments der Tasche abgewandt ist.

2. Käfigelement (1) gemäß Anspruch 1, wobei das eine oder die mehreren Metallblechbauteile (4) des Käfigsegments aus einem Metallblech geschnitten, insbesondere mit einem Laser geschnitten, gestanzt und/oder genibbelt sind.

3. Käfigsegment (1) gemäß Anspruch 1, wobei zumindest eines der Metallblechbauteile (4) der Vorstufe des Käfigsegments (1) mit einer Kontur (16) versehen ist, wobei die Kontur (16) dazu ausgelegt ist, in der zusammengesetzten Form des Käfigsegments (1) das zumindest eine Funktionselement (14, 15, 18, 20) zu bilden.

4. Käfigsegment (1) gemäß einem der Ansprüche 1 bis 3, wobei das zumindest eine Funktionselement (14, 15, 18, 20) ein Führungselement (20) ist, das dazu ausgebildet ist, mit einem Bord zusammenzuwirken, um das Käfigsegment (1) zu führen, wobei das Führungselement (20) in der zusammengesetzten Form des Käfigsegments (1) dem Bord zugewandt ist.

5. Käfigsegment (1) gemäß einem der Ansprüche 1 bis 4, wobei das zumindest eine Funktionselement (14, 15, 18, 20) ein Verbindungselement ist, das dazu ausgelegt ist, mit einem Kopplungselement zusammenzuwirken, um das Käfigsegment (1) mit einem weiteren Käfigsegment (1) zu verbinden.

6. Käfigsegment (1) gemäß einem der vorherigen Ansprüche, wobei das Käfigsegment (1) an der Fügestelle (6) an dem ersten Ende ein erstes Ausrichtungselement (10) und an dem zweiten Ende ein zweites Ausrichtungselement (12) aufweist, wobei das zweite Ausrichtungselement (12) komplementär zu dem ersten Ausrichtungselement (10) ist, und wobei das erste und das zweite Ausrichtungselement (10, 12) zusammenwirken, um das erste Ende und das zweite Ende in zumindest einer ersten Richtung festzulegen.

7. Wälzlagerkäfig (30) mit einer Mehrzahl von Käfigsegmenten (1) nach einem der Ansprüche 1 bis 6, wobei eine Mehrzahl von Käfigsegmenten (1) über ein Kopplungselement zumindest zeitweise verbindbar sind, wobei das Kopplungselement mit zumindest einem Funktionselement, insbesondere einem Verbindungselement, zusammenwirkt.

8. Wälzlager mit mindestens einem Innenring (26) und mindestens einem Außenring, wobei zwischen dem Innenring (26) und dem Außenring Wälzkörper (32) angeordnet sind, wobei die Wälzkörper (32) durch einen Wälzlagerkäfig (30) nach Anspruch 7 gehalten werden.

## Claims

1. Cage segment (1) for a multi-part rolling-bearing cage (30), in particular for slewing bearings, wherein, in a preliminary stage of manufacture, the cage segment (1) is present in the form of a construction kit that consists of one or more planar metal-sheet components (4), wherein the metal-sheet components (4) are configured to be put together so as to form the cage segment (1), wherein, in its put-together form, the cage segment (1) has at least one joining point (6) at which two ends of the metal-sheet components (4) are joined together so as to form a pocket (2) which is suitable for accommodating at least one roller-shaped rolling body (32), wherein the cage segment (1) is provided with at least one functional element (14, 15, 18, 20), wherein, in the put-together form of the cage segment (1), the at least one functional element (14, 15, 18, 20) is formed, in particular bent, out of the plane of the metal-sheet component (4), **characterized in that** the at least one functional element is a holding element which is configured to interact with a tapered roller, cylindrical roller or needle so as to hold the latter, wherein, in the put-together form of the cage segment, the holding element is directed away from the pocket.

2. Cage element (1) according to Claim 1, wherein the one or the multiple metal-sheet components (4) of the cage segment are cut, in particular laser-cut, punched and/or nibbled, out of a metal sheet.

3. Cage segment (1) according to Claim 1, wherein at least one of the metal-sheet components (4) of the preliminary stage of the cage segment (1) is provided with a contour (16), wherein the contour (16) is configured to form the at least one functional element (14, 15, 18, 20) in the put-together form of the cage segment (1).

4. Cage segment (1) according to one of Claims 1 to 3, wherein the at least one functional element (14, 15, 18, 20) is a guide element (20) which is configured to interact with a rim so as to guide the cage segment (1), wherein, in the put-together form of the cage segment (1), the guide element (20) is directed towards the rim.

5. Cage segment (1) according to one of Claims 1 to 4, wherein the at least one functional element (14, 15, 18, 20) is a connecting element which is configured to interact with a coupling element so as to connect the cage segment (1) to a further cage segment (1).

6. Cage segment (1) according to one of the preceding claims, wherein, at the joining point (6), the cage segment (1) has a first alignment element (10) at the first end and has a second alignment element (12) at the second end, wherein the second alignment element (12) complements the first alignment element (10), and wherein the first and second alignment elements (10, 12) interact so as to fix the first and second ends in at least one first direction.

7. Rolling-bearing cage (30) having a plurality of cage segments (1) according to one of Claims 1 to 6, wherein a plurality of cage segments (1) are connectable at least temporarily via a coupling element, wherein the coupling element interacts with at least one functional element, in particular a connecting element.

8. Rolling bearing having at least one inner ring (26) and having at least one outer ring, wherein rolling bodies (32) are arranged between the inner ring (26) and the outer ring, wherein the rolling bodies (32) are held by a rolling-bearing cage (30) according to Claim 7.

## Revendications

1. Segment de cage (1) pour une cage de palier à roulement en plusieurs parties (30), notamment pour des paliers à roulement de grande taille, où, dans un stade préliminaire de la fabrication, le segment de cage (1) se présente sous la forme d'un kit constitué d'un ou plusieurs composants plats en tôle métallique (4), les composants en tôle métallique (4) étant conçus pour être assemblés afin de réaliser le segment de cage (1), où le segment de cage (1) présente, dans sa forme assemblée, au moins un point d'assemblage (6) au niveau duquel deux extrémités des composants en tôle métallique (4) sont assemblées pour former une poche (2) apte à recevoir au moins un corps de roulement en forme de rouleau (32), où le segment de cage (1) est muni d'au moins un élément fonctionnel (14, 15, 18, 20), où, dans la forme assemblée du segment de cage (1), l'au moins un élément fonctionnel (14, 15, 18, 20) est formé, notamment plié, à partir du plan du composant en tôle métallique (4), **caractérisé en ce que** l'au moins un élément fonctionnel est un élément de retenue réalisé pour coopérer avec un rouleau conique, un rouleau cylindrique ou une aiguille afin de les maintenir, l'élément de retenue étant détourné de la poche dans la forme assemblée du segment de cage.

2. Élément de cage (1) selon la revendication 1, où le ou les composants en tôle métallique (4) du segment de cage sont découpés dans une tôle métallique, notamment découpés au laser, poinçonnés et/ou grignotés.

3. Segment de cage (1) selon la revendication 1, où au moins l'un des composants en tôle métallique (4) du stade préliminaire du segment de cage (1) est pourvu d'un contour (16), où le contour (16) est conçu pour former, dans la forme assemblée du segment de cage (1), l'au moins un élément fonctionnel (14, 15, 18, 20).

4. Segment de cage (1) selon l'une quelconque des revendications 1 à 3, où l'au moins un élément fonctionnel (14, 15, 18, 20) est un élément de guidage (20) qui est réalisé pour coopérer avec un rebord afin de guider le segment de cage (1), où l'élément de guidage (20) est tourné vers le rebord dans la forme assemblée du segment de cage (1).

5. Segment de cage (1) selon l'une quelconque des revendications 1 à 4, où l'au moins un élément fonctionnel (14, 15, 18, 20) est un élément de liaison qui est conçu pour coopérer avec un élément d'accouplement afin de relier le segment de cage (1) à un autre segment de cage (1).

6. Segment de cage (1) selon l'une quelconque des revendications précédentes, où le segment de cage (1) présente, au niveau du point d'assemblage (6) un premier élément d'alignement (10) à la première extrémité et un deuxième élément d'alignement (12) à la deuxième extrémité, le deuxième élément d'alignement (12) étant complémentaire du premier élément d'alignement (10), et où les premier et deuxième éléments d'alignement (10, 12) coopèrent pour définir la première extrémité et la deuxième extrémité dans au moins une première direction.

7. Cage de palier à roulement (30) comportant une pluralité de segments de cage (1) selon l'une quelconque des revendications 1 à 6, où une pluralité de segments de cage (1) peuvent être reliés au moins temporairement par l'intermédiaire d'un élément d'accouplement, où l'élément d'accouplement coopère avec au moins un élément fonctionnel, notamment un élément de liaison.

8. Palier à roulement comportant au moins une bague intérieure (26) et au moins une bague extérieure, où des corps de roulement (32) sont agencés entre la bague intérieure (26) et la bague extérieure, les corps de roulement (32) étant maintenus par une cage de palier à roulement (30) selon la revendication 7.
